# EUROPÄISCHE PATENTSCHRIFT

(11) **EP 3 269 950 B1**
(45) Veröffentlichungstag und Bekanntmachung des Hinweises auf die Patenterteilung: **03.07.2019**
(21) Anmeldenummer: 17180999.9
(22) Anmeldetag: 12.07.2017
(51) Int. Cl.: F01M 1/18, F01P 3/06, F01P 7/14, F01M 5/00, F16K 31/06

(54) **STEUERVENTIL ZUR VERSORGUNG EINER ODER MEHRERER DÜSEN MIT EINEM DRUCKFLUID**
CONTROL VALVE FOR SUPPLYING ONE OR MORE NOZZLES WITH A PRESSURIZED FLUID
SOUPAPE DE COMMANDE DESTINÉE À ALIMENTER EN FLUIDE SOUS PRESSION UN OU PLUSIEURS GICLEURS

(30) Priorität: 14.07.2016 DE 102016113003
(43) Veröffentlichungstag der Anmeldung: 17.01.2018
(73) Patentinhaber: Wagner GmbH & Co. KG, 36043 Fulda (DE)
(72) Erfinder: Reinhard, Manuel, 86093 Künzell (DE)
(74) Vertreter: SSM Sandmair

(56) Entgegenhaltungen:
- DE-A1- 4 231 998
- DE-A1-102004 031 286
- DE-C2- 2 546 273
- DE-U1-202012 003 969
- FR-A1- 2 877 709

## Beschreibung

Die Erfindung betrifft ein Steuerventil zur Versorgung einer oder mehrerer Düsen mit einem Druckfluid, beispielsweise zur Versorgung einer oder mehrerer Kühldüsen zur Sprühkühlung einer oder mehrerer Komponenten einer Brennkraftmaschine. Das Druckfluid dient in derartigen Verwendungen als Kühlfluid zur konvektiven Kühlung der jeweiligen Komponente. Das Steuerventil kann insbesondere zur Versorgung einer oder mehrerer Kühldüsen zur Sprühkühlung eines oder mehrere Kolben eines Verbrennungsmotors eines Kraftfahrzeugs dienen. Gegenstand der Erfindung ist auch ein Kühlsystem, dass zumindest das Steuerventil und eine oder mehrere an das Steuerventil angeschlossene Kühldüsen beinhaltet.

Zur Kühlung von Kolben von Verbrennungsmotoren wird ein Kühlfluid, typischerweise vom Schmierölkreis des Verbrennungsmotors abgezweigtes Schmieröl, mittels Düsen gegen die Unterseiten der Kolben gesprüht. Der Zustrom des Kühlfluids zu den Düsen wird mit einem oder mehreren Ventilen gesteuert. Den Düsen kann jeweils ein eigenes Ventil zugeordnet sein. Der Zustrom zu mehreren Düsen kann auch mit einem für die Düsen gemeinsamen Ventil gesteuert werden. Um einen großen Volumenstrom mit einer möglichst kleinen Steuerkraft zu steuern, werden die Steuerventile mit einem Hauptventil im Zustrom zu den Düsen und einer Vorsteuereinrichtung zur Steuerung des Hauptventils ausgeführt.

Ein Steuerventil mit vorgesteuertem Hauptventil ist beispielsweise aus der US 2014/0264101 A1 bekannt. Das Steuerventil weist ein als Sitzventil ausgeführtes Hauptventil mit einem in einer Hauptleitung angeordneten Ventilkolben auf, der in beide axiale Richtungen seiner Beweglichkeit mit Druckfluid beaufschlagt wird. Die mit dem Druckfluid in Berührung kommenden Stirnflächen des Ventilkolbens sind so bemessen, dass der Ventilkolben bei gleichem Druck an beiden Stirnseiten in Schließposition in einen Ventilsitz gedrückt wird. In der Schließposition unterbricht der Ventilkolben die Hauptleitung und somit den Zustrom zu den Düsen. In der Schließposition wirkt das Druckfluid vom Druckanschluss des Steuerventils auf die dem Ventilsitz zugewandte Vorderseite des Ventilkolbens. Die auf den Ventilkolben ausgeübte Kraft ergibt sich aus dem Druck des Druckfluids und dem Strömungsquerschnitt des Ventilsitzes, der vom Ventilkolben in der Schließposition verschlossen wird. Der Ventilkolben begrenzt mit seiner Rückseite eine Steuerkammer. Ein in der Steuerkammer herrschender Steuerdruck wirkt in Richtung auf die Schließposition auf den Ventilkolben. Um den Steuerdruck zu erzeugen, weist die Steuerkammer einen durch den Ventilkolben führenden Einlass auf, durch den Druckfluid vom Druckanschluss in die Steuerkammer strömt. Die Steuerkammer weist ferner einen Auslass mit einem Vorsteuerquerschnitt auf, dessen Größe mittels eines Vorsteuerorgans verändert werden kann. Das Vorsteuerorgan ist mittels einer Elektromagneteinrichtung zwischen einer den Vorsteuerquerschnitt sperrenden ersten Vorsteuerposition und einer freigebenden zweiten Vorsteuerposition hin und her bewegbar. Als Vorsteuerorgan dient ein Anker der Elektromagneteinrichtung oder ein mit dem Anker axial unbeweglich verbundener Ventilstößel, der in der Schließposition axial gegen einen Ventilsitz der Vorsteuereinrichtung drückt, der den Vorsteuerquerschnitt bildet. Auf Grund der Beweglichkeit des Vorsteuerorgans bildet sich am Außenumfang des Vorsteuerorgans ein Spalt, durch den Druckfluid in die Elektromagneteinrichtung dringen kann. Dies kann bei den relativ zueinander beweglichen Teilen der Elektromagneteinrichtung und beim nadelförmigen Vorsteuerorgan aufgrund von im Druckfluid enthaltenen Feststoffpartikeln zu Reibverschleiß führen.

Um die Düsen mit dem Druckfluid zu versorgen, bewegt die Elektromagneteinrichtung das Vorsteuerorgan aus der Schließposition, so dass der Vorsteuerquerschnitt freigegeben wird und das Druckfluid aus der Steuerkammer abströmen kann. Aufgrund des hierdurch verringerten Steuerdrucks hebt der Ventilkolben vom Ventilsitz ab und gibt die Hauptleitung zu den Düsen frei. Eine Fehlfunktion der Elektromagneteinrichtung, beispielsweise aufgrund eines Defekts in der Stromversorgung, hat andererseits zur Folge, dass der Ventilkolben schon bei geringem Druck am Druckanschluss wegen des fehlenden Steuerdrucks in einer Durchflussposition verharrt. Die Düsen werden bei solch einer Fehlfunktion mit Druckfluid versorgt, dessen Druck für eine Sprühkühlung nicht ausreicht, so dass Druckfluid über die Düsen nutzlos abströmt. Handelt es sich bei dem Druckfluid um Schmieröl für den Motor eines Fahrzeugs, treten derartige Situationen typischerweise im Leerlauf des Motors auf, da das Schmieröl dann von der vom Motor angetriebenen Schmierölpumpe mit vergleichsweise geringem Druck gefördert wird. Durch das Abströmen des Schmieröls über die Düsen sinkt der Druck im Schmierölkreis, so dass die Versorgung von Schmierstellen gefährdet sein kann. Um diese zu verhindern, ist Steuerventilen der bekannten Art typischerweise ein Rückschlagventil zentral für mehrere Düsen oder pro Düse jeweils ein Rückschlagventil nachgeordnet.

Die DE 42 31 998 A1 offenbart ein elektromagnetisch betätigbares Steuerventil für den Einsatz in Automatikgetrieben von Kraftfahrzeugen, beispielsweise zur Druckmittelbeaufschlagung einer Kupplung. Das Steuerventil weist ein Hauptventil und eine Vorsteuereinrichtung für das Hauptventil auf. Die Vorsteuereinrichtung umfasst ein Vorsteuerorgan, das zwischen einer ersten Vorsteuerposition und einer zweiten Vorsteuerposition hin und her beweglich ist. Eine Feder hält das Vorsteuerorgan in der ersten Vorsteuerposition, in der es einen Vorsteuerquerschnitt einer Steuerkammer verschließt. Die Steuerkammer ist mit dem Druckanschluss des Steuerventils verbunden, so dass der am Druckanschluss herrschende Druck in der Steuerkammer als Steuerdruck auf das Vorsteuerorgan wirkt. Das Vorsteuerorgan ist mittels einer Elektromagneteinrichtung gegen die Kraft der Feder in die zweite Vorsteuerposition bewegbar. In der zweiten Vorsteuerposition gibt das Vorsteuerorgan den Vorsteuerquerschnitt frei, so dass das Druckfluid aus der Steuerkammer durch den Vorsteuerquerschnitt zu einem Reservoir abströmen kann. Das Vorsteuerorgan ist mit einer Membran gekoppelt, die einen stromab der Steuerkammer liegenden Ventilraum, durch den das Druckfluid zum Reservoir abströmen kann, stirnseitig zur Elektromagneteinrichtung verschließt, so dass die Elektromagneteinrichtung von dem das Druckfluid führenden Bereich des Steuerventils getrennt ist.

Es ist eine Aufgabe der Erfindung, ein Steuerventil zu schaffen, mit dem die Versorgung einer Düse, beispielsweise Kolbenkühldüse, bedarfsgerecht mit einfachen Mitteln energieeffizient sichergestellt werden kann.

Die Erfindung geht von einem Steuerventil aus, das einen Druckanschluss für ein Druckfluid, das heißt für ein unter Druck stehendes Fluid, einen Arbeitsanschluss für die Abführung des Druckfluids zu einer oder mehreren Düsen und einen primären Steuerquerschnitt aufweist, durch den das Druckfluid vom Druckanschluss zum Arbeitsanschluss strömen kann. Das Steuerventil umfasst ein Hauptventil mit einem mit dem Druckfluid beaufschlagbaren Ventilkolben, der zur Veränderung der Größe des primären Steuerquerschnitts zwischen einer Minimalflussposition und einer Maximalflussposition axial hin und her beweglich ist. Nimmt der Ventilkolben die Minimalflussposition ein, kann nur ein minimaler Strom des Druckfluids durch den primären Steuerquerschnitt strömen. Ist die Minimalflussposition wie bevorzugt eine Schließposition, schließt bzw. sperrt der Ventilkolben in der Minimalflussposition den primären Steuerquerschnitt, so dass durch den primären Steuerquerschnitt kein Druckfluid strömen kann. Bei in Maximalflussposition befindlichem Ventilkolben ist der primäre Steuerquerschnitt maximal groß. Bevorzugt gibt der Ventilkolben in der Maximalflussposition den primären Steuerquerschnitt vollkommen frei.

Eine Steuerkammer des Steuerventils weist zur Erzeugung eines auf den Ventilkolben axial wirkenden Steuerdrucks einen Einlass und zur Verringerung des Steuerdrucks einen Auslass für das Druckfluid auf. Um den in der Steuerkammer herrschenden Steuerdruck steuern zu können, weist vorzugsweise der Auslass einen der Größe nach veränderbaren Vorsteuerquerschnitt auf. Der Einlass kann ebenfalls einen der Größe nach veränderbaren Strömungsquerschnitt aufweisen, erforderlich ist dies jedoch nicht. In alternativen Ausführungen weist der Einlass den der Größe nach veränderbaren Vorsteuerquerschnitt auf, während der Auslass als Drossel gestaltet ist, um bei maximal geöffnetem Vorsteuerquerschnitt den Steuerdruck in der Steuerkammer aufbauen zu können. In bevorzugten Ausführungen wird jedoch der Auslass gesteuert und die Steuerkammer ist über den Einlass ständig mit dem Druckanschluss verbunden. Der den Einlass umfassende Strömungspfad vom Druckanschluss zur Steuerkammer kann über seine gesamte Länge einen konstanten Strömungsquerschnitt aufweisen oder aus mehreren Strömungsabschnitten mit unterschiedlichen, aber unveränderlichen Strömungsquerschnitten zusammengesetzt sein.

Das Steuerventil umfasst ferner eine Vorsteuereinrichtung mit einem Vorsteuerorgan und einer Elektromagneteinrichtung. Das Vorsteuerorgan ist zur Veränderung der Größe des Vorsteuerquerschnitts zwischen einer ersten Vorsteuerposition und einer zweiten Vorsteuerposition hin und her beweglich, vorzugsweise axial, und kann mittels der Elektromagneteinrichtung in die erste Vorsteuerposition bewegt werden.

In bevorzugten Ausführungen sind die erste Vorsteuerposition eine Minimalflussposition und die zweite Vorsteuerposition eine Maximalflussposition. Nimmt das Vorsteuerorgan die Minimalflussposition ein, ist der Vorsteuerquerschnitt minimal. Steuert das Vorsteuerorgan den Auslass, kann das Druckfluid nicht oder nur langsam aus der Steuerkammer abströmen so dass der Steuerdruck dem am Druckanschluss herrschenden Druck des Druckfluides näher kommt als bei in Maximalflussposition befindlichem Vorsteuerorgan. Zweckmäßigerweise ist die Minimalflussposition des Vorsteuerorgans eine Schließposition, in der das Vorsteuerorgan den Vorsteuerquerschnitt verschließt, so dass bei Anordnung des Vorsteuerorgans am oder im Auslass kein Druckfluid durch den Auslass aus der Steuerkammer strömen kann und der Steuerdruck zumindest im Wesentlichen dem Druck des Druckfluids am Druckanschluss entspricht. Nimmt das Vorsteuerorgan die Maximalflussposition ein, ist der Vorsteuerquerschnitt, d. h. die Größe des Vorsteuerquerschnitts, maximal. Steuert das Vorsteuerorgan den Auslass, kann das Druckfluid mit vergleichsweise geringem Strömungswiderstand aus der Steuerkammer strömen. In der Folge fällt der Steuerdruck.

Der Ventilkolben kann dem Steuerdruck entgegenwirkend mit Druckfluid vom Druckanschluss, also mit dem am Druckanschluss herrschenden Druck, beaufschlagbar sein und/oder mit der Federkraft einer Ventilfeder beaufschlagt werden. In bevorzugten Ausführungen ist der Ventilkolben in eine Richtung seiner Bewegbarkeit mit dem Druckfluid vom Druckanschluss und in die Gegenrichtung mit dem Steuerdruck beaufschlagbar, und zusätzlich wirkt in die Gegenrichtung, den Steuerdruck unterstützend, eine Ventilfeder auf den Ventilkolben.

Nach der Erfindung wird die Vorsteuereinrichtung mittels einer mit dem Vorsteuerorgan gekoppelten Membran verwirklicht, die mit dem Druckfluid beaufschlagbar und bei Beaufschlagung mit dem Druckfluid gegen eine Rückstellkraft verformbar ist. Das Vorsteuerorgan ist mit der Membran so gekoppelt, dass ein gegen die Rückstellkraft erfolgendes Verformen der Membran eine Bewegung des Vorsteuerorgans in Richtung auf die zweite Vorsteuerposition bewirkt. Die Membran kann insbesondere gegen eine elastische Rückstellkraft verformbar sein. Eine elastische Rückstellkraft kann mittels einer pneumatischen oder vorzugsweise einer mechanischen Feder, insbesondere einer Schraubendruckfeder, erzeugt werden. Die Membran kann als solche elastisch dehnbar sein, um die elastische Rückstellkraft gänzlich oder zu einem Teil zu erzeugen. Im Falle einer elastischen Verformbarkeit der Membran kann die Membran in Kombination mit einer pneumatischen oder mechanischen Feder die Rückstellkraft erzeugen. In bevorzugten Ausführungen wird die elastische Rückstellkraft zu einem überwiegenden Teil mittels einer zusätzlich zur Membran vorgesehenen Feder erzeugt. In alternativen Ausführungen kann die elastische Rückstellkraft auch ausschließlich von einer zusätzlich zur Membran vorgesehenen Feder erzeugt werden. Die Membran kann ich diesen Ausführungen flexibel, aber unelastisch sein.

Die Membran und das Vorsteuerorgan können mittels eines Getriebes, Gestänges oder dergleichen gekoppelt sein. Bevorzugt sind sie jedoch unbeweglich miteinander verbunden. Sie können separat gefertigt und miteinander gefügt oder in einem Verfahren der Urformung gemeinsam als Baueinheit geformt sein. Sie können aus dem gleichen Werkstoff bestehen. Bevorzugt besteht die Membran aus einem Elastomer oder weist eine Elastomerschicht oder eine Elastomermatrix mit eingebetteten Verstärkungselementen, beispielsweise Verstärkungsfasern, auf. Das Vorsteuerorgan kann aus einem metallenen Werkstoff oder aus Kunststoff, vorzugsweise einem thermoplastischen Kunststoff, bestehen. So können die Membran und das Vorsteuerorgan durch Pressformen oder vorzugsweise Spritzformen als Baueinheit geformt werden. Bestehen sie aus dem gleichen Werkstoff, beispielsweise aus einem Elastomer mit oder ohne Verstärkungselemente(n), können sie gemeinsam durch einfaches Spritzformen geformt werden. Unterscheiden sie sich dem Werkstoff nach, können sie durch Zweikomponenten-Spritzformen gemeinsam als Baueinheit geformt werden. In einer ebenfalls vorteilhaften Variante wird eines aus Vorsteuerorgan und Membran, vorzugsweise das Vorsteuerorgan, separat gefertigt, in eine Spritzform eingelegt und mit dem Material für das andere aus Vorsteuerorgan und Membran angespritzt oder bereichsweise umspritzt, so dass die Membran und das Vorsteuerorgan ebenfalls einen festen Verbund und somit eine Baueinheit bilden.

Das Druckfluid wirkt zur Verstellung des Vorsteuerorgans unmittelbar auf die Membran. Leckagen können vermieden und der Verschleiß beweglicher Teile verringert werden, da das bewegliche Vorsteuerorgan nicht durch die Wand einer Kammer ragt oder mittels eines beweglich durch eine Kammerwand ragenden Betätigungselements verstellt werden muss. Die Membran dient als flächenhafte Dichtstruktur, als Dichtmembran. Sie kann längs eines um einen nachgiebigen Membranbereich umlaufenden Rands einfach und sicher in Bezug auf das Druckfluid dicht montiert werden. Ein Abfluss zu einem Druckfluidreservoir kann entfallen.

Ist die Rückstellkraft, die dem Steuerdruck entgegen direkt oder indirekt auf die Membran wirkt, eine elastische Rückstellkraft, wird das Fail-Safe-Verhalten des Steuerventils verbessert. Mittels der elastischen Rückstellkraft kann ein Mindestdruck vorgegeben werden, bei dessen Erreichen oder Überschreiten die Membran nachgibt und das Steuerorgan in Richtung auf die zweite Vorsteuerposition bewegt wird. Die zweite Vorsteuerposition ist in derartigen Ausführungen eine Maximalflussposition. Zum Öffnen des Auslasses der Steuerkammer kommt es daher nicht auf die Funktionstüchtigkeit der Elektromagneteinrichtung an. Maßgeblich sind der auf die Membran wirkende Steuerdruck und die ihm entgegenwirkende elastische Rückstellkraft. Fällt die Stromversorgung der Elektromagneteinrichtung aus, wird eine angeschlossene Düseneinrichtung dennoch stets dann mit dem Druckfluid versorgt, wenn der Steuerdruck den mittels der elastischen Rückstellkraft vorgegebenen Mindestdruck erreicht oder überschritten hat. Der Mindestdruck kann insbesondere ein Überdruck von 1 ± 0.2 bar gemessen gegen den äußeren Umgebungsdruck am Ort der Düse(n) sein. Wegen der mittels der Membran verwirklichten Rückschlagfunktion wird bei geringem Druck des Druckfluids der Vorsteuerquerschnitt geschlossen oder zumindest verkleinert, so dass in der Steuerkammer ein ausreichender Steuerdruck herrscht, um den Ventilkolben in Richtung auf die Minimalflussposition zu bewegen. Hierdurch wird die Abgabe von Druckfluid, das nur unter vergleichsweise geringem Druck steht, durch den primären Steuerquerschnitt verhindert oder zumindest reduziert. Es kann weniger und vorteilhafterweise kein Druckfluid nutzlos zu der Düseneinrichtung abströmen. In der Folge können die gegebenenfalls mit dem Druckfluid zu versorgenden anderen Verbraucher, wie etwa Schmierstellen eines Motors eines Kraftfahrzeugs, mit höherer Sicherheit mit dem Druckfluid versorgt werden. Es wird auch kein Rückschlagventil zusätzlich zum Steuerventil benötigt, um einen derartigen Abfluss über die Düseneinrichtung zu verhindern.

Die Elektromagneteinrichtung kann in einem nicht bestromten Zustand vom Vorsteuerorgan entkoppelt sein.

Trotz verbessertem Fail-Safe-Verhalten kann eine hohe Flexibilität hinsichtlich der Steuerbarkeit des Druckfluids erhalten werden. Bei funktionstüchtiger Elektromagneteinrichtung kann diese das Vorsteuerorgan in Abhängigkeit von Steuersignalen einer übergeordneten Steuerung und somit grundsätzlich jederzeit in die erste Vorsteuerposition bewegen und dadurch die Versorgung zu der oder den Düsen unterbrechen. Wird die Elektromagneteinrichtung hingegen stromlos geschaltet oder fällt die Stromversorgung aus, wird die Düseneinrichtung bei Erreichen oder Überschreiten des erläuterten Mindestdrucks mit dem Druckfluid versorgt.

Die Membran kann in einer zusätzlich zur Steuerkammer vorgesehenen Membrankammer angeordnet sein. Sie kann einen gegen die Rückstellkraft nachgiebigen Wandbereich der Membrankammer bilden. In bevorzugten Ausführungen ist die Membran jedoch der Rückstellkraft entgegenwirkend mit dem Steuerdruck beaufschlagbar. Sie kann insbesondere einen gegen die Rückstellkraft nachgiebigen Wandbereich der Steuerkammer bilden. Vorzugsweise bildet die Membran einen Wandbereich, der dem Ventilkolben axial in einem Abstand gegenüberliegt. Ist die Membran, wie bevorzugt, in axialer Flucht zum Ventilkolben angeordnet, können die radialen Abmessungen des Steuerventils verringert und ein zwar axial entsprechend gestrecktes, aber radial schlankes Steuerventil erhalten werden. Eine radial schlanke Bauweise kommt den Einbauverhältnissen, wie sie typischerweise bei Verbrennungsmotoren von Kraftfahrzeugen anzutreffen sind, entgegen.

Die Vorsteuereinrichtung kann als Rückschlagventil gebildet sein, indem das Vorsteuerorgan über die Membran in Richtung auf die erste Vorsteuerposition mit der elastischen Rückstellkraft beaufschlagt und dadurch der Vorsteuerquerschnitt gesperrt wird. Die Rückstellkraft kann das Vorsteuerorgan bei Einnahme der ersten Vorsteuerposition in einen Ventilsitz der Vorsteuereinrichtung drücken. Im Bereich des Ventilsitzes ist in derartigen Ausführungen der mittels des Vorsteuerorgans der Größe nach veränderbare Vorsteuerquerschnitt gebildet. Die Größe der Rückstellkraft und der dem Druckfluid ausgesetzten Fläche der Membran oder einer die Membran stützenden Stützstruktur bestimmen eine Druckschwelle, bei deren Überschreitung das Vorsteuerorgan von seinem Sitz abhebt und den Vorsteuerquerschnitt freigibt. Auf diese Weise kann ein Mindestdruck vorgegeben werden, der am Druckanschluss erreicht oder überschritten werden muss, damit der Ventilkolben den primären Steuerquerschnitt des Hauptventils freigibt und Druckfluid über den Arbeitsanschluss zu der oder den Düsen strömen kann. Der Mindestdruck ist vernünftigerweise so gewählt, dass eine Sprühverteilung des Druckfluides durch die Düse(n) gewährleistet ist.

Die Elektromagneteinrichtung wirkt in bevorzugten Ausführungen über die Membran auf das Vorsteuerorgan, sodass die Membran die Elektromagneteinrichtung dem Druckfluid gegenüber abdichtet und somit abschirmt. Die Elektromagneteinrichtung umfasst eine mit Steuersignalen steuerbare Spule und einen hin und her beweglichen Anker der mit der Spule elektromagnetisch zusammen wirkt. Die Steuersignale für die Spule können insbesondere Steuerströme sein. In einfachen Ausführungen ist die Spule zwischen diskreten Schaltstellungen unsteuerbar, beispielsweise zwischen bestromt und unbestromt. Der Anker kann auf einen Stößel wirken oder unmittelbar einen Stößel bilden, der in Richtung auf die erste Vorsteuerposition auf das Vorsteuerorgan wirkt. Bevorzugt wirkt der Stößel direkt auf das Vorsteuerorgan. Alternativ kann der Stößel stattdessen auf die Membran und der Kopplung der Membran mit dem Vorsteuerorgan entsprechend auf das Vorsteuerorgan wirken. Der Stößel kann mit einem Anker der Elektromagneteinrichtung insbesondere gefügt oder in einem Stück geformt sein.

Die Elektromagneteinrichtung kann dazu eingerichtet und mit dem Vorsteuerorgan so gekoppelt sein, dass die Elektromagneteinrichtung eine Bewegung des Vorsteuerorgans sowohl in Richtung auf die erste Vorsteuerposition als auch eine Bewegung in Richtung auf die zweite Vorsteuerposition bewirkt. In bevorzugten Ausführungen ist die Kopplung jedoch derart, dass mittels der Elektromagneteinrichtung nur eine Bewegung des Vorsteuerorgans in Richtung auf die erste Vorsteuerposition bewirkt wird, während die Bewegung in die Gegenrichtung, in Richtung auf die zweite Vorsteuerposition, durch Beaufschlagung mit dem Druckfluid bewirkt wird. Die Elektromagneteinrichtung kann in Bezug auf die Bewegung des Vorsteuerorgans in Richtung auf die zweite Vorsteuerposition vom Vorsteuerorgan insbesondere entkoppelt sein. Dies kann vorzugsweise dadurch bewerkstelligt werden, dass eine Federkraft in Richtung auf die zweite Vorsteuerposition auf den Anker und/oder den Stößel der Elektromagneteinrichtung wirkt. Der Stößel kann in einer inaktiven Position einen lichten Abstand zu dem Vorsteuerorgan oder der Membran oder einer die Membran stützenden, der Nachgiebigkeit der Membran entsprechend hin und her beweglichen Stützstruktur aufweisen.

In den Unteransprüchen werden ebenfalls vorteilhafte Merkmale der Erfindung offenbart.

Nachfolgend wird die Erfindung an Hand von Ausführungsbeispielen erläutert. An den Ausführungsbeispielen offenbarte Merkmale bilden jeweils einzeln und in jeder Kombination von Einzelmerkmalen die Gegenstände der Ansprüche und auch die vorstehend erläuternden Ausführungen und Aspekte vorteilhaft weiter. Es zeigen:
- Figur 1: ein Steuerventil eines ersten Ausführungsbeispiels in einem Zustand minimaler Durchströmung und nicht aktivierter Elektromagneteinrichtung,
- Figur 2: das Steuerventil des ersten Ausführungsbeispiels in einem Zustand maximaler Durchströmung,
- Figur 3: das Steuerventil des ersten Ausführungsbeispiels im Zustand minimaler Druckströmung und aktivierter Elektromagneteinrichtung, und
- Figur 4: ein Steuerventil eines zweiten Ausführungsbeispiels in einem Zustand minimaler Durchströmung und aktivierter Elektromagneteinrichtungen.

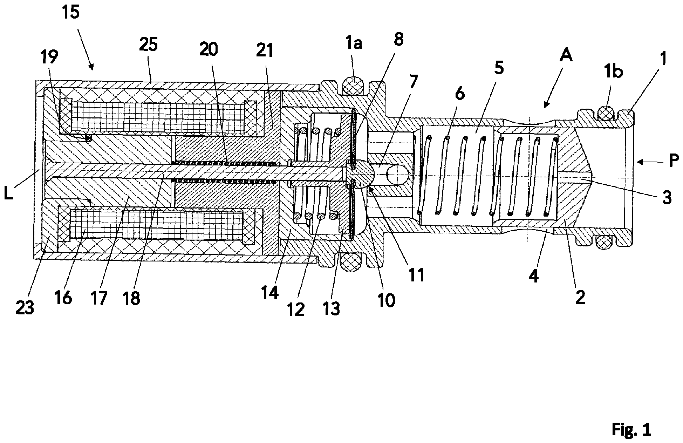

Figur 1 zeigt ein Steuerventil eines ersten Ausführungsbeispiels in einem Längsschnitt. Das Steuerventil weist ein Ventilgehäuse 1 mit einem Druckanschluss P und einem Arbeitsanschluss A auf. Mit dem Druckanschluss P ist es an eine Zuführung für ein unter Druck stehendes Fluid, im folgenden Druckfluid, und über die Zuführung an eine Druckquelle für das Druckfluid anschließbar oder angeschlossen. Die Druckquelle kann insbesondere eine Pumpe zur Förderung des Druckfluids sein. Über den Arbeitsanschluss A kann das am Druckanschluss P einströmende Druckfluid vom Steuerventil abströmen und einer Düseneinrichtung mit einer oder mehreren Düsen zur Sprühverteilung des Druckfluids zugeführt werden. Die eine oder mehreren Düsen können beispielsweise Kühldüsen zur Sprühkühlung einer oder mehrerer Komponenten einer Brennkraftmaschine sein.

In bevorzugten Anwendungen handelt es sich bei der Brennkraftmaschine um einen Verbrennungsmotor zum Antreiben eines Kraftfahrzeuges. In derartigen Anwendungen kann oder können die über eine Abführleitung am Arbeitsanschluss A angeschlossene(n) Düse(n) der Sprühkühlung von einem oder mehreren Kolben des Verbrennungsmotors dienen und zu diesem Zweck in an sich bekannter Weise im Motor angeordnet sein. Als Kühlfluid kann insbesondere das Schmieröl für den Motor dienen, das vom Schmierölsystem abgezweigt wird. Das durch die Sprühverteilung abgegebene Kühlfluid kann in weiterer Funktion die zu kühlende(n) Komponente(n) auch schmieren.

Wenn im Rahmen der Anmeldung von einer Sprühverteilung oder -kühlung die Rede ist, soll damit eine Verteilung oder Kühlung des Druckfluids durch Sprühen und auch eine Verteilung oder Kühlung durch Spritzen umfasst sein.

Das Steuerventil umfasst ein Hauptventil mit einem Ventilkolben 2 und eine Vorsteuereinrichtung zum Umsteuern des Ventilkolbens 2 zwischen unterschiedlichen Kolbenpositionen. Die Vorsteuereinrichtung umfasst eine mit dem Druckfluid beaufschlagbare Membran 8 und ein mit der Membran 8 mechanisch gekoppeltes Vorsteuerorgan 10, dass mittels der Membran 8 zwischen unterschiedlichen Vorsteuerpositionen hin und her bewegbar ist.

Der Ventilkolben 2 ist in einem axial erstreckten Gehäuseabschnitt des Ventilgehäuses 1 zwischen einer Position minimaler Durchströmung, im folgenden Minimalflussposition, und einer Position maximaler Durchströmung, im folgenden Maximalflussposition, axial hin und her beweglich. Der axial erstreckte Gehäuseabschnitt führt den Ventilkolben 2 unter Ausbildung eines über den Umfang des Ventilkolbens 2 und axial erstreckten Dichtspalts. Der Gehäuseabschnitt dient als Gleitführung für den Ventilkolben. Das Hauptventil ist dementsprechend als Schiebeventil ausgeführt. Mittels des Ventilkolbens 2 wird ein primärer Steuerquerschnitt 4 des Steuerventils gesteuert. Der primäre Steuerquerschnitt 4 verbindet den Druckanschluss P bei geöffnetem Hauptventil mit dem Arbeitsanschluss A. Der primäre Steuerquerschnitt 4 umfasst mehrere Durchgangsöffnungen, die im Gehäuseabschnitt im Bereich des Dichtspalts über den Umfang des Gehäuseabschnitts verteilt angeordnet sind. Nimmt der Ventilkolben 2 wie in Figur 1 dargestellt die Minimalflussposition ein, ist die Größe des primären Steuerquerschnitts minimal. Im Ausführungsbeispiel entspricht die Minimalflussposition einer Schließposition, so dass der Ventilkolben 2 den Arbeitsanschluss A vom Druckanschluss P sperrt und das Hauptventil nicht durchströmt werden kann. Die Versorgung zur Düseneinrichtung ist unterbrochen.

Der Ventilkolben 2 wird im Ventilbetrieb an einer in Bezug auf den Druckanschluss P stromaufwärtigen Stirnseite, die im Folgenden als Vorderseite bezeichnet wird, mit dem am Druckanschluss P einströmenden Druckfluid beaufschlagt. An einer von der Vorderseite axial abgewandten Rückseite des Ventilkolbens 2 ist eine Steuerkammer 5 gebildet. Der Ventilkolben 2 begrenzt die Steuerkammer 5 axial. Die Steuerkammer 5 und der an die Vorderseite des Ventilkolbens 2 grenzende Druckraum sind ständig mit dem Druckanschluss P verbunden. Ein von der Vorderseite zur Rückseite durch den Ventilkolben 2 erstreckter Verbindungskanal 3 verbindet die Steuerkammer 5 permanent mit dem an die Vorderseite des Ventilkolbens 2 grenzenden Druckraum.

Der Verbindungskanal 3 bildet den Einlass der Steuerkammer 5. Das vom Druckanschluss P durch den Verbindungskanal bzw. Einlass 3 einströmende Druckfluid erzeugt in der Steuerkammer 5 einen Gegendruck, der dem auf die Vorderseite des Ventilkolbens 2 wirkenden Druck entgegenwirkt. Um den Ventilkolben 2 in Bezug auf seine axiale Position steuern zu könne, ist der Steuerdruck der Steuerkammer 5 steuerbar. Die Steuerung wird mittels der Vorsteuereinrichtung am Auslass 7 der Steuerkammer 5 vorgenommen.

Der den Ventilkolben 2 umschließende Gehäuseabschnitt ist zylindrisch. Die mit dem in das Steuerventil einströmenden Druckfluid beaufschlagbare Stirnfläche an der Vorderseite und die Stirnfläche an der mit dem Steuerdruck beaufschlagbaren Rückseite des Ventilkolbens 2 sind gleich groß, so dass bei gleichem Druck an der Vorderseite und Rückseite am Ventilkolben 2 ein Gleichgewicht der vom Druckfluid ausgeübten Druckkräfte herrscht. Eine Ventilfeder 6 sorgt dafür, dass der Ventilkolben 2 bei Druckgleichheit in die Minimalflussposition bewegt oder in der Minimalflussposition gehalten wird.

Die Ventilfeder 6 ist in der Steuerkammer 5 angeordnet. Es handelt sich um eine Schraubenfeder, die auf Druck beansprucht wird. Die Ventilfeder 6 kann der Bauart und/oder der Federbeanspruchung nach auch andersartig ausgeführt und/oder angeordnet sein, eine Schraubendruckfeder wird jedoch bevorzugt. Die Ventilfeder 6 stützt sich mit einem Federende an einem im Ventilgehäuse 1 gebildeten Federsitz und mit ihrem anderen Federende unmittelbar am Ventilkolben 2 ab. Eine unmittelbare Abstützung am Ventilkolben 2 ist zweckmäßig, aber nicht unerlässlich. So könnte die Ventilfeder 6 auch über ein oder mehrere Zwischenglieder auf den Ventilkolben 2 wirken.

Der Ventilkolben 2 ist als Hohlkolben ausgeführt. Die Steuerkammer 5 erstreckt sich axial in den an der Rückseite offenen, hohlen Ventilkolben 2, wodurch die axiale Baulänge des Steuerventils bei Ausführung als Schiebeventil verringert werden kann. Der Ventilfeder 6 steht dennoch ein ausreichend langer Federweg zur Verfügung. Ein Schiebeventil hat einem Sitzventil gegenüber den Vorteil einer besseren Axialführung des Ventilkolbens 2 und einer genaueren Steuerbarkeit des primären Steuerquerschnitts, hier des Steuerquerschnitts 4. Soll der Ventilkolben 2 wie bevorzugt nur zwischen einer Minimalflussposition/Schließposition und einer Maximalflussposition umgesteuert werden, kann die Ventilfeder 6 nach Federhärte und/oder Federvorspannung hierauf einfach und genau ausgelegt werden.

Die Membran 8 begrenzt die Steuerkammer 5 an einem axialen Kammerende. Die Membran 8 bildet eine nachgiebige Stirnwand der Steuerkammer 5. Sie wird im Ventilbetrieb mit dem in der Steuerkammer 5 herrschenden Steuerdruck beaufschlagt. Dem Steuerdruck wirkt eine elastische Rückstellkraft entgegen, die mittels eines Federglieds 12 erzeugt wird. Das Federglied 12 ist von der Steuerkammer 5 aus gesehen hinter der Membran 8 angeordnet. Im Ausführungsbeispiel ist es in einem hinter der Membran 8 befindlichen Aufnahmeraum des Ventilgehäuses 1 aufgenommen. Es ist an einem Federende am Ventilgehäuse 1 abgestützt und wirkt mit dem anderen Federende dem Steuerdruck entgegen auf die Membran 8.

Das Federglied 12 wirkt nicht unmittelbar, sondern über eine Stützstruktur 13 auf die Membran 8. Die Membran 8 als solche muss dem Steuerdruck daher keinen oder keinen nennenswerten Widerstand entgegensetzen, so dass die elastische Rückstellkraft ausschließlich oder zumindest zum überwiegenden Teil durch das Federglied 12 bestimmt sein kann. Bevorzugt ist die Membran 8 jedoch elastisch dehnbar, so dass sie einen gewissen, wenngleich kleinen Beitrag zur Rückstellkraft leistet. Die Stützstruktur 13 dient der Verteilung und Übertragung der vom Federglied 12 erzeugten elastischen Rückstellkraft bzw. Federkraft auf die unter der Einwirkung des Steuerdrucks gegen die Rückstellkraft verformbare Membran 8.

Die Stützstruktur 13 kann mit der Membran 8 in einem reinen Druckkontakt angeordnet oder mit einem zentralen Bereich der Membran 8 in Bezug auf die Richtung der Verformbarkeit der Membran 8, im Ausführungsbeispiel axial, unbeweglich gefügt sein. Im Falle einer Fügeverbindung muss allerdings eine für die Erfüllung der Vorsteuerfunktion ausreichende Verformbarkeit der Membran 8 gewährleistet sein.

Das Vorsteuerorgan 10 nimmt im dargestellten Zustand des Steuerventils eine erste Vorsteuerposition ein, in der es den Auslass 7 der Steuerkammer 5 verschließt. Bei in der ersten Vorsteuerposition befindlichem Vorsteuerorgan 10 strömt das Druckfluid im Ventilbetrieb durch den vom Verbindungskanal 3 gebildeten Einlass in die Steuerkammer 5, kann aber aus der Steuerkammer 5 nicht abströmen, da der Auslass 7 vom Vorsteuerorgan 10 verschlossen wird. Das Federglied 12 wirkt in Richtung auf die erste Vorsteuerposition auf das Vorsteuerorgan 10. Im Ausführungsbeispiel drückt das Federglied 12 das Vorsteuerorgan 10 in einen am Auslass 7 gebildeten Ventilsitz, der einen mittels des Vorsteuerorgans 10 der Größe nach veränderbaren Vorsteuerquerschnitt 11 bestimmt.

Die Membran 8 ist im Strömungspfad des Druckfluids zwischen dem Druckanschluss P und dem veränderbaren Vorsteuerquerschnitt 11 angeordnet. Wie bevorzugt ist sie im Strömungspfad des Druckfluids zwischen dem Einlass 3 der Steuerkammer 5 und dem Vorsteuerquerschnitt 11 angeordnet. Die Membran 8 begrenzt den Strömungspfad stromauf des Vorsteuerquerschnitts 11. Sie ist somit auch dann mit dem Druckfluid in Kontakt, wenn das Vorsteuerorgan 10 die erste Vorsteuerposition einnimmt, in der es den Vorsteuerquerschnitt 11 vorzugsweise verschließt. Nimmt das Vorsteuerorgan 10 die erste Vorsteuerposition ein, in der es wie im Ausführungsbeispiel bevorzugt den Vorsteuerquerschnitt 11 verschließt, ist die Membran 8 dem in der Steuerkammer 5 herrschenden Steuerdruck ausgesetzt.

Der in der Steuerkammer 5 herrschende Steuerdruck wirkt unmittelbar auf die Membran 8 und über die Membran 8 auf die Stützstruktur 13. Die Membran 8 kann wie bereits erwähnt so ausgeführt sein, dass sie dem Steuerdruck keinen praktisch relevanten Widerstand entgegensetzt. Die auf das Federglied 12 wirkende Kraft wird durch den Steuerdruck und die mit dem Steuerdruck beaufschlagbare Fläche der Stützstruktur 13 bestimmt. Die Membran 8 kann in guter Näherung hinsichtlich der Kräfteverhältnisse vernachlässigt werden. Allerdings ist die Membran 8 vorzugsweise elastisch dehnbar, derart, dass sie sich im Betrieb des Steuerventils nur elastisch verformt und auch nach einer Vielzahl von Lastwechseln und damit einhergehenden Verformungen wieder die Form des ursprünglichen, unbelasteten Zustands annimmt.

Die Membran 8 erfüllt primär eine Dichtfunktion, indem sie die Steuerkammer 5 dicht verschließt, so dass die Beweglichkeit des Steuerorgans 10 nicht, wie bei den Steuerventilen des Standes der Technik, mit Leckageverlusten einhergeht.

Mittels des Federglieds 12 wird eine Druckschwelle vorgegeben, bei deren Erreichen oder Überschreiten das Federglied 12 einfedert und das Vorsteuerorgan 10 in Richtung auf die zweite Vorsteuerposition bewegt wird und somit von seinem Ventilsitz abhebt. Bei dieser Bewegung des Vorsteuerorgans 10 vergrößert sich der Vorsteuerquerschnitt 11, so dass das Druckfluid durch den Auslass 7 aus der Steuerkammer 5 abströmen kann.

Zweckmäßigerweise ist der Auslass 7 mit dem Arbeitsanschluss A verbunden, so dass das aus der Steuerkammer 5 abströmende Druckfluid über den Arbeitsanschluss A zu der oder den Düsen geführt wird.

Am Außenumfang des Ventilgehäuses 1 kann sich ein Verbindungskanal erstrecken, der den Auslass 7 mit dem Arbeitsanschluss A verbindet. Hierfür kann eine äußere Struktur, die in den Figuren nicht abgebildet ist, einen Axialabschnitt des Ventilgehäuses 1 umgeben, so dass ein ringförmiger Verbindungskanal erhalten wird, der sich zwischen der äußeren Struktur und dem von dieser umgebenen Axialabschnitt des Ventilgehäuses 1 erstreckt. Der Auslass 7 und der Arbeitsanschluss A münden vorzugsweise in diesem Axialabschnitt in den Verbindungskanal, aus dem das Druckfluid zu der oder den Düsen strömen kann. Das Ventilgehäuse 1 kann mit besagtem Axialabschnitt axial in die äußere Struktur ragen und mittels Dichtelementen 1a und 1b axial abgedichtet sein. Die beispielsweise als Dichtringe gebildeten Dichtelemente 1a und 1b begrenzen in derartigen Ausführungen den Verbindungskanal und dichten ihn ab. In alternativen Ausführungen kann ein Verbindungskanal oder können mehrere Verbindungskanäle im Ventilgehäuse 1 erstreckt sein. In nochmals alternativen Ausführungen kann der Auslass 7 mittels einer Verbindungsleitung mit dem Arbeitsanschluss A verbunden sein, so dass durch den Auslass 7 abströmendes Druckfluid erst an einer vom Ventilgehäuse 1 entfernten Stelle mit dem Druckfluid vom Arbeitsanschluss A zusammengeführt wird.

Solange der Steuerdruck unterhalb der Druckschwelle bleibt, verschließt das Vorsteuerorgan 10 den Vorsteuerquerschnitt 11 und somit den Auslass 7. Aufgrund des permanent offenen Verbindungskanals 3 folgt der Steuerdruck dem Druck, den das Druckfluid am Druckanschluss P aufweist. Der Steuerdruck und der Druck am Druckanschluss P können als gleich angesehen werden. Die Ventilfeder 6 hält den Ventilkolben 2 in der Minimalflussposition, die im Ausführungsbeispiel wie bevorzugt eine Schließposition ist. Der Ventilkolben 2 verschließt den primären Steuerquerschnitt 4 und trennt dadurch den Arbeitsanschluss A vom Druckanschluss P.

Die Druckschwelle, bei deren Überschreitung die Einfederbewegung des Federdrucks 12 einsetzt, wird durch die Federvorspannung bestimmt, mit der das Federglied 12 eingebaut ist. Mittels eines eingebauten Federglieds, insbesondere einer Schraubendruckfeder, kann die Federvorspannung und somit die Druckschwelle sehr genau und auf einfache Weise beim Einbau eingestellt werden. Grundsätzlich kann anstelle einer mechanischen Feder auch eine pneumatische Feder vorgesehen sein, die allerdings hinsichtlich der Leckage von Druckgas einen Zusatzaufwand erfordern würde.

Das Vorsteuerorgan 10 ist mit der Membran 8 wie bereits erwähnt mechanisch gekoppelt. Die Kopplung ist derart, dass das Vorsteuerorgan 10 der beim Einfedern des Federglieds 12 erfolgenden Verformung der Membran 8 in Richtung auf die zweite Vorsteuerposition folgt. Das Vorsteuerorgan 10 ist in einem zentralen Bereich der Membran 8 angeordnet, im Ausführungsbeispiel ist es im Zentrum der Membran 8 angeordnet, und im zentralen Bereich nicht beweglich mit der Membran 8 verbunden.

Die Membran 8 und das Vorsteuerorgan 10 sind separat gefertigt und miteinander gefügt. Sie können insbesondere form- und/oder kraftschlüssig gefügt sein. Die Fügeverbindung kann aber auch einen Stoffschluss von Membran 8 und Vorsteuerorgan 10 einschließen oder grundsätzlich auch nur stoffschlüssig sein. In ebenfalls bevorzugten Ausführungen sind die Membran 8 und das Vorsteuerorgan 10 als Spritzgusseinheit ausgeführt. Die Membran 8 und das Vorsteuerorgan 10 können beispielsweise aus unterschiedlichen Werkstoffen, insbesondere Kunststoffen, in einem Zweikomponenten-Spritzgießverfahren hergestellt werden. So kann die Membran 8 insbesondere aus einem Elastomer und das Vorsteuerorgan 10 ebenfalls aus einem Elastomer oder vorzugsweise aus einem demgegenüber härteren thermoplastischen Kunststoff gefertigt sein. Grundsätzlich können die Membran 8 und das Vorsteuerorgan 10 als einheitliches Spritzgussteil auch aus dem gleichen Elastomer bestehen. In noch einer Variante kann das Vorsteuerorgan 10 aus Kunststoff oder einem metallenen Werkstoff bestehen und als vorgeformtes Teil beim Herstellen der Membran 8 mit dem vorzugsweise Membranmaterial, elastomeren Kunststoffmaterial, bereichsweise umspritzt oder angespritzt werden.

Das Vorsteuerorgan 10 ist in Richtung auf die zweite Vorsteuerposition, im Ausführungsbeispiel axial, in Kontakt mit der Stützstruktur 13. Hierbei kann es sich um einen reinen Anschlagkontakt handeln, in den die Stützstruktur 13 durch das Federglied 12 gezwungen wird. Das Vorsteuerorgan 10 kann mit der Stützstruktur 13 aber auch gefügt sein, beispielsweise direkt oder über die Membran 8.

Die Membran 8 ist im Ventilgehäuse 1 längs eines äußeren, um das Vorsteuerorgan 10 umlaufenden Umfangsrands in Bezug auf das Druckfluid dicht montiert. Die Membran 8 ist über ihren äußeren Umfangsrand unter Ausbildung einer umlaufenden Dichtungsfuge fixiert, kann sich im Bereich der Dichtungsfuge also nicht bewegen. Aufgrund der nicht beweglichen, statischen Abdichtung kann ein dichter Verschluss der Steuerkammer 5 auf einfache Weise sicher gewährleistet werden. Die Membran 8 ist längs ihres Umfangsrand 5 axial zwischen einer umlaufenden Schulter des Ventilgehäuses 1 und einem axial gegenüberliegenden, stirnseitigen Rand einer Montagestruktur 14 eingeklemmt, um die sichere Abdichtung der Steuerkammer 5 durch die Membran 8 zu erhalten.

Das Gehäuse 1 ist im Wesentlichen rohrförmig und weist ein den Druckanschluss P bildendes, offenes axiales erstes Ende und an der axial gegenüberliegenden Stirnseite ein ebenfalls offenes Ende auf, so dass am einen Ende, beim Druckanschluss P, die Ventilfeder 6 und der Ventilkolben 12 und am gegenüberliegenden Ende die Membran 8 mit dem Vorsteuerorgan 10, die Stützstruktur 13 und das Federglied 12 eingesetzt werden können. Anschließend wird die Montagestruktur 14 eingesetzt und befestigt, beispielsweise mit dem Ventilgehäuse 1 verschraubt, um die Klemmverbindung der Membran 8 herzustellen.

In Bezug auf konstruktiv und/oder strömungstechnisch günstige Merkmale sei noch angemerkt, dass in der Steuerkammer 5 axial zwischen dem Ventilkolben 2 und der Membran 8 der Membran 8 axial zugewandt der Ventilsitz für das Steuerorgan 10 gebildet ist.

Das Steuerventil umfasst eine zur Vorsteuereinrichtung gehörende Elektromagneteinrichtung 15. Die Elektromagneteinrichtung 15 ist dazu eingerichtet, Steuersignale einer übergeordneten Steuerung, beispielsweise einer Motorsteuerung eines Kraftfahrzeugs, zu empfangen und in Abhängigkeit von den Steuersignalen auf das Vorsteuerorgan 10 einzuwirken. Auf diese Weise wird das Steuerventil nicht nur entsprechend der Rückschlagfunktion des Federglieds 12 gesteuert, sondern kann an den tatsächlichen Kühlbedarf eines zu kühlenden Bauteils, wie etwa einer Komponente einer Brennkraftmaschine, flexibel angepasst werden. Die Steuersignale können insbesondere Steuerströme sein. Die Elektromagneteinrichtung 15 ist zwischen den zwei Zuständen 'bestromt' und 'unbestromt' umsteuerbar.

Die Elektromagneteinrichtung 15 umfasst eine elektrische Spule 16 und eine in Richtung auf die erste Vorsteuerposition und in die Gegenrichtung hin und her bewegliche Fügeeinheit aus einem Anker 17 und einem Stößel 18. Der Stößel 18 verlängert den Anker 17 in Richtung auf das Vorsteuerorgan 10 und liegt dem Vorsteuerorgan 10 in einer in Figur 1 eingenommenen Inaktivposition gegenüber. Eine Feder 20 beaufschlagt den Anker 17 und dadurch den Stößel 18 in Richtung auf die Inaktivposition. In der Inaktivposition wirkt der Stößel 18 auf das Vorsteuerorgan 10 nicht ein. Er weist vom Vorsteuerorgan 10 einen axial lichten Abstand auf.

Die Elektromagneteinrichtung 15 ist dazu eingerichtet, den Stößel 18 zwischen zwei diskreten Schaltpositionen umzusteuern. Die eine der Schaltpositionen ist die in Figur 1 eingenommene Inaktivposition bei unbestromter Spule 16. Durch Bestromung der Spule 16 wird der Anker 17 und damit zusammen der Stößel 18 in Richtung auf das Vorsteuerorgan 10 in eine Aktivposition, der anderen Schaltposition des Stößels 18, bewegt. Die Inaktivposition des Stößels 18 wird mittels eines innerhalb der Elektromagneteinrichtung 15 vorgesehenen Anschlags 19 durch Anschlagkontakt vorgegeben. Den Anschlag 19 bildet eine Montagestruktur23, im Ausführungsbeispiel ein Deckel, die im oder am Gehäuse 25 der Elektromagneteinrichtung 15 angeordnet und mit dem Gehäuse 25 unbeweglich verbunden ist, so dass sie als ein Teil des Gehäuses der Elektromagneteinrichtung 15 aufgefasst werden kann. Eine weitere, in das Gehäuse 25 der Elektromagneteinrichtung 15 eingesetzte Montagestruktur 21 wird vom Stößel 18 in Richtung auf das Vorsteuerorgan 10 durchragt. Die Montagestruktur 21 stützt die Feder 20 an einem Federende. Mit dem anderen Federende wirkt die Feder 20 in Richtung auf die Inaktivposition auf den Stößel 18; genauer gesagt wirkt sie unmittelbar auf den Anker 17 und über diesen auf den Stößel 18.

Der Stößel 18 wird mit Federkraft in Richtung auf die Inaktivposition beaufschlagt und ist mit einer elektromagnetischen Kraft in Richtung auf die Aktivposition beaufschlagbar. Nimmt der Stößel 18 die Inaktivposition ein, ergibt sich die Position des Vorsteuerorgans 10 aus dem Gleichgewicht der vom Steuerdruck herrührenden Kraft und der Federkraft des Federglieds 12. Wird die Spule 16 bestromt, überwindet die elektromagnetische Kraft die Federkraft der Feder 20 und bewegt den Stößel 18 in die Aktivposition. Im unbestromten Zustand nimmt der Stößel 18 stets die Inaktivposition ein. Im bestromten Zustand der Elektromagneteinrichtung 15 nimmt der Stößel 18 hingegen stets die Aktivposition ein. In der Aktivposition drückt der Stößel 18 das Vorsteuerorgan 10 ungeachtet der Größe des in der Steuerkammer 5 herrschenden Steuerdrucks in die erste Vorsteuerposition, die das Vorsteuerorgan 10 ungeachtet der Position des Stößels 18 auch stets dann einnimmt, wenn der in der Steuerkammer 5 herrschende Steuerdruck unterhalb der für das Einfedern des Federglieds 12 erforderlichen Druckschwelle liegt.

Übersteigt der Steuerdruck die mittels des Federglieds 12 vorgegebene Druckschwelle, hebt das Vorsteuerorgan 12 in Richtung auf die zweite Vorsteuerposition vom Ventilsitz ab. Der Vorsteuerquerschnitt 11 wird freigegeben, so dass Druckfluid aus der Steuerkammer 5 durch den Vorsteuerquerschnitt 11 und somit durch den Auslass 7 abströmen kann. Der den Einlass in die Steuerkammer 5 bildende Verbindungskanal 3 ist so gestaltet, dass das durch den Verbindungskanal 3 vom Druckanschluss P in die Steuerkammer 5 einströmende Druckfluid den durch das am Auslass 7 ausströmende Druckfluid verursachten Druckverlust nicht ausgleichen kann. Unter dem weiterhin hohen Druck an der Vorderseite des Ventilkolbens 2 bewegt sich der Ventilkolben 2 gegen die Kraft der Ventilfeder 6 und den verringerten Steuerdruck in Richtung auf die Maximalflussposition.

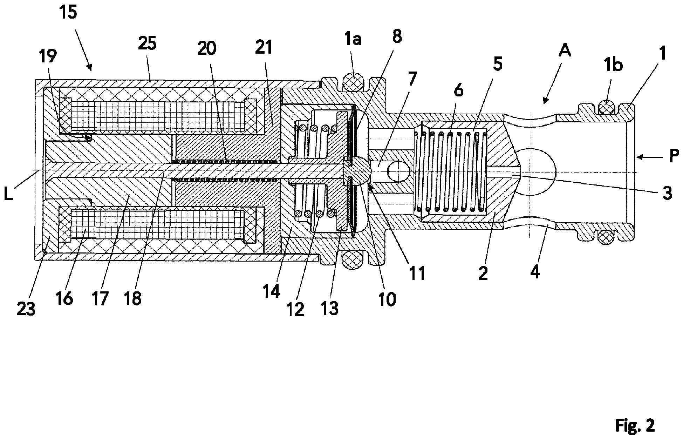

Figur 2 zeigt das Steuerventil des ersten Ausführungsbeispiels im Zustand maximaler Durchströmung des Hauptventils. Der Ventilkolben 2 nimmt die Maximalflussposition ein. Der primäre Steuerquerschnitt 4 ist vom Ventilkolben 2 vollständig frei und somit maximal. Das Druckfluid kann vom Druckanschluss P widerstandsarm durch den primären Steuerquerschnitt zum Arbeitsanschluss A strömen und durch diesen zur Düseneinrichtung abströmen. Die Düseneinrichtung sprüht das Druckfluid gegen die jeweils zu kühlende Komponente.

Solange der Steuerdruck über der vorgegebenen Druckschwelle liegt und die vom Druckfluid auf die Vorderseite des Ventilkolbens 2 ausgeübte Kraft die vom Steuerdruck und der Ventilfeder 6 ausgeübte Kraft übersteigt, verbleibt der Ventilkolben 2 in der Maximalflussposition. Sinkt der Druck am Druckanschluss P unter einen mittels der Ventilfeder 6 vorgegebenen Wert, bewegt sich der Ventilkolben 2 in Richtung auf die Minimalflussposition, so dass sich wieder der in Figur 1 dargestellte Ventilzustand einstellt. Hierdurch wird sichergestellt, dass bei unzureichendem Druck am Druckanschluss P nicht unnötigerweise Druckfluid zur Düseneinrichtung strömen und dort nutzlos ausströmen kann.

Mittels der Elektromagneteinrichtung 15 kann die Durchströmung des Hauptventils aber auch bei an sich für die Sprühverteilung ausreichend hohem Druck am Druckanschluss P unterbrochen und die Sprühverteilung dadurch an den tatsächlichen Kühlbedarf der zu kühlenden Komponente(n) angepasst werden. Um die Versorgung der Düsenreinrichtung zu unterbrechen, wird die Elektromagneteinrichtung 15, genauer gesagt die Spule 16, bestromt und der Anker 17 samt Stößel 18 durch die dabei erzeugte elektromagnetische Kraft in Richtung auf die erste Vorsteuerposition des Vorsteuerorgans 10 bewegt. Bei dieser Bewegung gelangt der Stößel 18 in Richtung auf die erste Vorsteuerposition in Druckkontakt gegen das Vorsteuerorgan 10 und stößt das Vorsteuerorgan 10 bei der Bewegung in die Aktivposition in Richtung auf und letztlich in die erste Vorsteuerposition.

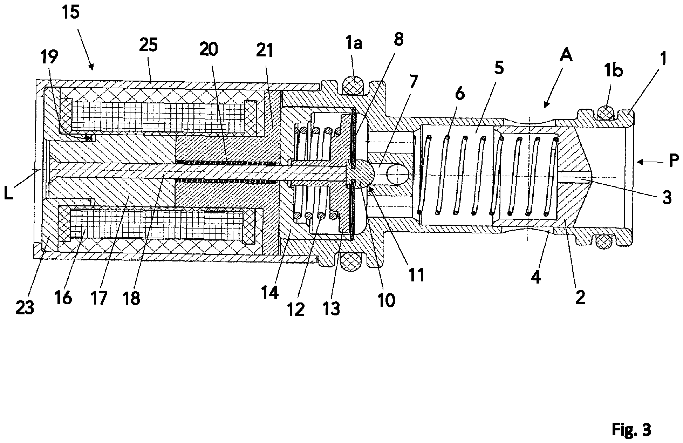

In Figur 3 nimmt der Stößel 18 die Aktivposition und das Vorsteuerorgan 10 die erste Vorsteuerposition ein. Der Stößel 18 drückt das Vorsteuerorgan 10 in den Ventilsitz am Auslass 7 der Steuerkammer 5, so dass das Vorsteuerorgan 10 den Vorsteuerquerschnitt 11 verschließt. Druckfluid kann durch den Verbindungskanal 3 bzw. den hierdurch gebildeten Einlass in die Steuerkammer 5 einströmen, aber nicht mehr abströmen. Der Steuerdruck folgt somit wieder dem Druck an der Vorderseite des Ventilkolbens 2. Solange jedoch die Spule 16 bestromt wird, hält die Elektromagneteinrichtung 15 das Vorsteuerorgan 10 in der ersten Vorsteuerposition. Die Druckfluidzufuhr zur Düseneinrichtung bleibt unterbrochen. Stellt die übergeordnete Steuerung fest, dass erneut ein Kühlbedarf besteht, wird die Stromzufuhr zur Elektromagneteinrichtung 15 unterbrochen, so dass die Feder 20 den Stößel 18 in die Inaktivposition bewegt und das Steuerventil wieder in den in Figur 1 dargestellten Zustand maximaler Durchströmung überführt wird.

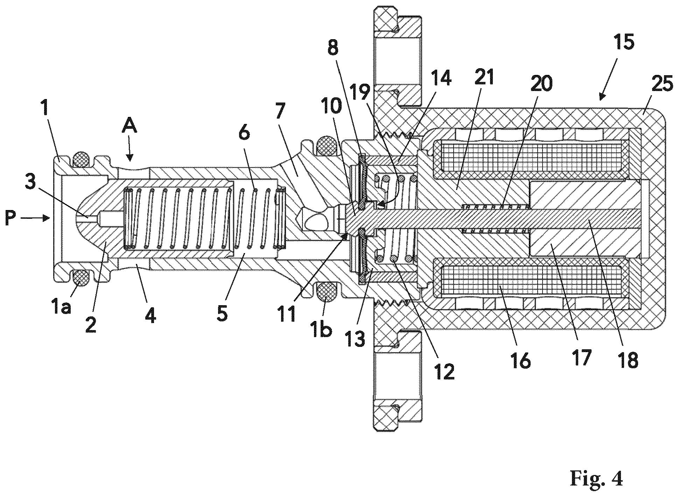

Figur 4 zeigt ein Steuerventil eines zweiten Ausführungsbeispiels mit einem Hauptventil und einer Vorsteuereinrichtung. Die funktionsgleichen Komponenten sind mit den Bezugszeichen des ersten Ausführungsbeispiels versehen. Vom ersten Ausführungsbeispiel unterscheidet sich das Steuerventil im Wesentlichen dadurch, dass das Vorsteuerorgan 10 und der Stößel 18 relativ zueinander nicht beweglich, sondern als Baueinheit geformt sind. Sie können miteinander gefügt oder, wie im zweiten Ausführungsbeispiel, gemeinsam urgeformt sein. Das Vorsteuerorgan 10 bildet ein axiales Ende des Stößels 18.

Die Membran 8 stützt sich an ihrer von der Steuerkammer 5 abgewandten Rückseite wie im ersten Ausführungsbeispiel an einer Stützstruktur 13 ab. Im Unterschied zum ersten Ausführungsbeispiel ist die Stützstruktur 13 an ihrem Außenumfang in einem Gleitkontakt axial hin und her beweglich geführt, während die Stützstruktur 13 des ersten Ausführungsbeispiels an einem Innenumfang im Gleitkontakt mit dem Stößel 18 des ersten Ausführungsbeispiels geführt wird. Die Führung am Außenumfang ist hinsichtlich der Kippstabilität günstig.

Wegen der festen Verbindung von Stößel 18 und Vorsteuerorgan 10 kann das Vorsteuerorgan 10 mittels der Feder 20 und des Stößels 18 auf Zug an einem Axialanschlag 19 der Stützstruktur 13 gehalten und dadurch ein Anhaften am Vorsteuerquerschnitt 11 verhindert werden. Die Feder 20 übt auf den Stößel 18 und somit auf das Vorsteuerorgan 10 eine Federkraft aus, die vom Vorsteuerquerschnitt 11 weg und in Richtung auf den Anschlag 19 gerichtet ist. Wird die Spule 16 bestromt, übt sie auf den Anker 17 eine in Richtung auf den Vorsteuerquerschnitt 11 gerichtete Kraft aus, durch die der Anker 17 und damit gemeinsam der Stößel 18 in die in Figur 4 eingenommene Aktivposition bewegt werden, in der der Stößel 18 den Vorsteuerquerschnitt 11 verschließt.

In dem in Figur 4 dargestellten Zustand ist der in der Steuerkammer 5 auf die Membran 8 wirkende Steuerdruck so groß, dass die Stützstruktur 23 eine von der Steuerkammer 5 aus gesehen rückwärtige Anschlagposition einnimmt, in der der Anschlag 19 vom Vorsteuerorgan 10 axial abgerückt ist. Wird die Spule 16 unter diesen Verhältnissen stromlos geschaltet, bewirkt die Feder 20, dass sich der Anker 17 und damit der Stößel 18 und das Vorsteuerorgan 10 in die zweite Vorsteuerposition bewegen und der Vorsteuerquerschnitt 11 freigegeben wird. Sinkt der Steuerdruck wie zum ersten Ausführungsbeispiel beschrieben unter eine vorgegebene Druckschwelle, bewegt die Feder 12 die Stützstruktur 13 und somit die Membran 8 und das Vorsteuerorgan 10 in die erste Vorsteuerposition, in der das Vorsteuerorgan 10 den Vorsteuerquerschnitt 11 verschließt, solange der Druck in der Vorsteuerkammer 5 die mittels der Feder 12 vorgegebene Druckschwelle nicht übersteigt.

Im zweiten Ausführungsbeispiel ist ein Gehäuse 25 der Elektromagneteinrichtung 15 auf das Ventilgehäuse 1 geschraubt. Beim Zusammenschrauben der Gehäuse drückt die im Gehäuse 25 der Elektromagneteinrichtung 15 aufgenommene Montagestruktur 21 axial gegen die im Ventilgehäuse 1 aufgenommene Montagestruktur 14, die ihrerseits axial gegen einen äußeren Rand der Membran 8 drückt und dadurch für eine Abdichtung der Steuerkammer 5 mittels der Membran 8 sorgt. Im Unterschied zum ersten Ausführungsbeispiel dient die Montagestruktur 14 nicht nur der Befestigung der Membran 8, sondern dient auch als Axialführung für die Stützstruktur 13.

Von den erläuterten Unterschieden abgesehen, entspricht das Steuerventil des zweiten Ausführungsbeispiels dem Steuerventil des ersten Ausführungsbeispiels, so dass auf die Ausführungen zum ersten Ausführungsbeispiel im Weiteren verwiesen wird.

## Patentansprüche

1. Steuerventil zur Versorgung einer oder mehrerer Düsen mit einem Druckfluid, vorzugsweise zur Versorgung einer oder mehrerer Kühldüsen zur Sprühkühlung einer oder mehrerer Komponenten einer Brennkraftmaschine, das Steuerventil umfassend:
1.1 einen Druckanschluss (P), einen Arbeitsanschluss (A) und einen primären Steuerquerschnitt (4), durch den das Druckfluid vom Druckanschluss (P) zum Arbeitsanschluss (A) strömen kann,
1.2 einen mit dem Druckfluid beaufschlagbaren Ventilkolben (2), der zur Veränderung der Größe des primären Steuerquerschnitts (4) zwischen einer Minimalflussposition, die insbesondere eine Schließposition sein kann, und einer Maximalflussposition axial hin und her beweglich ist,
1.3 eine Steuerkammer (5), die zur Erzeugung eines auf den Ventilkolben (2) axial wirkenden Steuerdrucks einen Einlass (3) und zur Verringerung des Steuerdrucks einen Auslass (7) für das Druckfluid aufweist, wobei der Einlass oder der Auslass (7) einen der Größe nach veränderbaren Vorsteuerquerschnitt (11) aufweist,
1.4 ein Vorsteuerorgan (10), das zur Veränderung der Größe des Vorsteuerquerschnitts (11) zwischen einer ersten Vorsteuerposition und einer zweiten Vorsteuerposition hin und her beweglich ist,
1.5 eine Elektromagneteinrichtung (15), mittels der das Vorsteuerorgan (10) bewegbar ist, und
1.6 eine Membran (8), die mit dem Druckfluid beaufschlagbar und durch die Beaufschlagung gegen eine Rückstellkraft verformbar ist,
1.7 wobei das Vorsteuerorgan (10) mit der Membran (8) gekoppelt ist, so dass ein gegen die Rückstellkraft erfolgendes Verformen der Membran (8) eine Bewegung des Vorsteuerorgans (10) in Richtung auf die zweite Vorsteuerposition bewirkt,
**dadurch gekennzeichnet, dass**
1.8 das Vorsteuerorgan (10) mittels der Elektromagneteinrichtung (15) in die erste Vorsteuerposition bewegbar ist und
1.9 die Membran (8) mit dem Steuerdruck beaufschlagbar und durch die Beaufschlagung gegen die Rückstellkraft verformbar ist.

2. Steuerventil nach dem vorhergehenden Anspruch, wobei die Membran (8) in einem vom Druckanschluss (P) bis zum veränderbaren Vorsteuerquerschnitt (11) erstreckten Strömungspfad des Druckfluids angeordnet ist.

3. Steuerventil nach einem der vorhergehenden Ansprüche, wobei der Auslass (7) der Steuerkammer (5) mit dem Arbeitsanschluss (A) verbunden ist, so dass aus der Steuerkammer (5) abströmendes Druckfluid über den Arbeitsanschluss (A) zu der oder den Düsen geführt wird.

4. Steuerventil nach einem der vorhergehenden Ansprüche, umfassend ein mit Federvorspannung angeordnetes Federglied (12) zur Erzeugung der auf die Membran (8) dem Druckfluid entgegenwirkenden Rückstellkraft.

5. Steuerventil nach einem der vorhergehenden Ansprüche, wobei die Membran (8) an einer dem Druckfluid abgewandten Rückseite, vorzugsweise an einer von der Steuerkammer (5) abgewandten Rückseite, an einer in Richtung auf die erste Vorsteuerposition und in Richtung auf die zweite Vorsteuerposition beweglichen Stützstruktur (13) abgestützt ist, wobei die Rückstellkraft vorzugsweise auf die Stützstruktur wirkt.

6. Steuerventil nach einem der vorhergehenden Ansprüche, wobei die Membran (8) einen Wandbereich der Steuerkammer (5) oder einer mit dem Druckanschluss (P) verbundenen Membrankammer bildet.

7. Steuerventil nach einem der vorhergehenden Ansprüche, wobei sich die Steuerkammer (5) axial zwischen dem Ventilkolben (2) und der Membran (8) erstreckt und vom Ventilkolben (2) an einem axialen Ende und von der Membran (8) am anderen axialen Ende begrenzt wird.

8. Steuerventil nach einem der vorhergehenden Ansprüche, wobei ein Sitz für das Vorsteuerorgan (10) den Vorsteuerquerschnitt (11) bildet und die Rückstellkraft in Richtung auf den Sitz auf die Membran (8) und das Vorsteuerorgan (10) wirkt.

9. Steuerventil nach einem der vorhergehenden Ansprüche, umfassend ein Gehäuse (1) mit einem axial erstreckten Gehäuseabschnitt, der den Ventilkolben (2) unter Ausbildung eines über den Umfang des Ventilkolbens (2) und axial erstreckten Dichtspalts umgibt und den primären Steuerquerschnitt (4) im Bereich des umfänglichen Dichtspalts aufweist.

10. Steuerventil nach einem der vorhergehenden Ansprüche, wobei der Ventilkolben (2) dem Steuerdruck entgegenwirkend mit dem Druckfluid vom Druckanschluss (P) beaufschlagbar ist, wobei in bevorzugten Ausführungen der in der Steuerkammer (5) herrschende Steuerdruck in Richtung auf die Minimalflussposition und das Druckfluid vom Druckanschluss in Richtung auf die Maximalflussposition auf den Ventilkolben (2) wirken.

11. Steuerventil nach einem der vorhergehenden Ansprüche, wobei die Elektromagneteinrichtung (15) eine steuerbare Spule (16) und einen Stößel (18) umfasst, der mittels der Spule (16) in eine Wirkrichtung bewegbar ist, vorzugsweise gegen die Federkraft einer Feder (20), wobei eine in die Wirkrichtung erfolgende Bewegung des Stößels (16) eine Bewegung des Vorsteuerorgans (10) in die erste Vorsteuerposition bewirkt.

12. Steuerventil nach einem der vorhergehenden Ansprüche, wobei
(i) das Vorsteuerorgan (10) mit der Membran (8) gefügt oder durch Spritzformen oder Pressformen als Baueinheit gefertigt ist; und/oder
(ii) der Stößel (18) nach Anspruch 11 und das Vorsteuerorgan (10) entweder miteinander unbeweglich verbunden, beispielsweise gefügt oder gemeinsam urgeformt, sind oder
(iii) der Stößel (18) nach Anspruch 11 mit dem Vorsteuerorgan (10) in die Wirkrichtung und vorzugsweise auch gegen die Wirkrichtung nur in Druckkontakt zusammenwirkt.

13. Steuerventil nach einem der vorhergehenden Ansprüche, wobei ein durch den Ventilkolben (2) erstreckter Verbindungskanal den Einlass (2) der Steuerkammer (5) bildet.

14. Steuerventil nach einem der vorhergehenden Ansprüche, umfassend eine Ventilfeder (6) zur Erzeugung einer in Richtung auf die Minimalflussposition auf den Ventilkolben (2) wirkenden Federkraft.

15. Kühlsystem zur Sprühkühlung einer oder mehrerer Komponenten einer Brennkraftmaschine mit einem Kühlfluid, vorzugsweise zur Sprühkühlung eines oder mehrerer Kolben eines Verbrennungsmotors eines Kraftfahrzeugs, das Kühlsystem umfassend:
15.1 eine oder mehrere Kühldüsen zur Sprühkühlung der zu kühlenden Komponente(n),
15.2 das Steuerventil nach einem der vorhergehenden Ansprüche und
15.3 eine Abführleitung, die an den Arbeitsanschluss (A) angeschlossen und mit der einen oder den mehreren Kühldüsen verbunden ist, um das als Kühlfluid dienende Druckfluid zu der oder den Kühldüsen führen zu können.

## Claims

1. A control valve for supplying one or more nozzles with a pressure fluid and preferably for supplying one or more cooling nozzles for spray-cooling one or more components of a combustion engine, said control valve comprising:
1.1 a pressure port (P), a working port (A) and a primary control cross-section (4) through which the pressure fluid can flow from the pressure port (P) to the working port (A);
1.2 a valve piston (2) which can be charged with the pressure fluid and axially moved back and forth between a minimum flow position, which can in particular be a closing position, and a maximum flow position, in order to vary the size of the primary control cross-section (4);
1.3 a control chamber (5) which comprises an inlet (3) for the pressure fluid, for generating a control pressure which acts axially on the valve piston (2), and an outlet (7) for the pressure fluid for reducing the control pressure, wherein the inlet or the outlet (7) exhibits a pilot cross-section (11) which is variable in terms of its size;
1.4 a pilot member (10) which can be moved back and forth between a first pilot position and a second pilot position, in order to vary the size of the pilot control cross-section (11);
1.5 an electromagnetic device (15) by means of which the pilot member (10) can be moved; and
1.6 a membrane (8) which can be charged with the pressure fluid and deformed, by being charged with the pressure fluid, against a restoring force,
1.7 wherein the pilot member (10) is coupled to the membrane (8), such that deforming the membrane (8), against the restoring force, moves the pilot member (10) in the direction of the second pilot position,
**characterised in that**
1.8 the pilot member (10) can be moved into the first pilot position by means of the electromagnetic device (15), and
1.9 the membrane (8) can be charged with the control pressure and deformed, against the restoring force, by being charged.

2. The control valve according to the preceding claim, wherein the membrane (8) is arranged in a flow path of the pressure fluid which extends from the pressure port (P) up to the variable pilot control cross-section (11).

3. The control valve according to any one of the preceding claims, wherein the outlet (7) of the control chamber (5) is connected to the working port (A), such that pressure fluid flowing off from the control chamber (5) is guided via the working port (A) to the nozzle or nozzles.

4. The control valve according to any one of the preceding claims, comprising a spring member (12), arranged with a spring bias, for generating the restoring force which acts on the membrane (8), counter to the pressure fluid.

5. The control valve according to any one of the preceding claims, wherein the membrane (8) is supported on a rear side facing away from the pressure fluid, preferably a rear side facing away from the control chamber (5), of a supporting structure (13) which can be moved in the direction of the first pilot position and in the direction of the second pilot position, wherein the restoring force preferably acts on the supporting structure (13).

6. The control valve according to any one of the preceding claims, wherein the membrane (8) forms a wall region of the control chamber (5) or a wall region of a membrane chamber which is connected to the pressure port (P).

7. The control valve according to any one of the preceding claims, wherein the control chamber (5) extends axially between the valve piston (2) and the membrane (8) and is limited by the valve piston (2) at one axial end and by the membrane (8) at the other axial end.

8. The control valve according to any one of the preceding claims, wherein a seating for the pilot member (10) forms the pilot control cross-section (11), and the restoring force acts on the membrane (8) and the pilot member (10) in the direction of the seating.

9. The control valve according to any one of the preceding claims, comprising a housing (1) featuring an axially extending housing portion which surrounds the valve piston (2), forming a sealing gap which extends axially and over the circumference of the valve piston (2), and comprises the primary control cross-section (4) in the region of the circumferential sealing gap.

10. The control valve according to any one of the preceding claims, wherein the valve piston (2) can be charged with the pressure fluid from the pressure port (P), acting counter to the control pressure, wherein in preferred embodiments, the control pressure prevailing in the control chamber (5) acts in the direction of the minimum flow position, and the pressure fluid from the pressure port (10) acts on the valve piston (2) in the direction of the maximum flow position.

11. The control valve according to any one of the preceding claims, wherein the electromagnetic device (15) comprises a controllable coil (16) and a plunger (18) which can be moved an in effective direction by means of the coil (16), preferably against the spring force of a spring (20), wherein moving the plunger (18) in the effective direction moves the pilot member (10) into the first pilot position.

12. The control valve according to any one of the preceding claims, wherein
(i) the pilot member (10) is joined to the membrane (8) or produced as an assembly unit with the membrane (8) in an injection-moulding or compacting process; and/or
(ii) either the plunger (18) according to Claim 11 and the pilot member (10) are connected immovably to each other, for example joined or originally moulded together, or
(iii) the plunger (18) according to Claim 11 co-operates with the pilot member (10) in the effective direction and preferably also counter to the effective direction, in a pressing contact only.

13. The control valve according to any one of the preceding claims, wherein a connecting channel which extends through the valve piston (2) forms the inlet (3) of the control chamber (5).

14. The control valve according to any one of the preceding claims, comprising a valve spring (6) for generating a spring force which acts on the valve piston (2) in the direction of the minimum flow position.

15. A cooling system for spray-cooling one or more components of a combustion engine with a cooling fluid and preferably for spray-cooling one or more pistons of an internal combustion engine of a motor vehicle, said cooling system comprising:
15.1 one or more cooling nozzles for spray-cooling the component(s) to be cooled;
15.2 the control valve according to any one of the preceding claims; and
15.3 a drainage conduit which is attached to the working port (A) and connected to the one or more cooling nozzles in order to be able to guide the pressure fluid, which serves as the cooling fluid, to the cooling nozzle or nozzles.

## Revendications

1. Soupape de commande pour l'alimentation d'une ou plusieurs buses en fluide sous pression, de préférence pour l'alimentation d'une ou plusieurs buses de refroidissement par pulvérisation d'un ou plusieurs composants d'un moteur à combustion, cette soupape de commande comprenant :
1.1 un raccord de pression (P), un raccord de travail (A) et une section de commande primaire (4), à travers laquelle le fluide sous pression peut s'écouler du raccord de pression (P) vers le raccord de travail (A),
1.2 un piston de soupape (2) pouvant être sollicité par le fluide sous pression, qui est mobile axialement avec un mouvement de va-et-vient entre une position de flux minimal, qui peut, plus particulièrement, être une position de fermeture, et une position de flux maximal, pour la modification de la taille de la section de commande primaire (4),
1.3 une chambre de commande (5) qui comprend, pour la production d'une pression de commande agissant axialement sur le piston de soupape (2), une entrée (3) et, pour la réduction de la pression de commande, une sortie (7) pour le fluide sous pression, l'entrée ou la sortie (7) présentant une section de pilotage (11) de taille variable,
1.4 un organe de pilotage (10) qui est mobile avec un mouvement de va-et-vient entre une première position de pilotage et une deuxième position de pilotage, pour la modification de la taille de la section de pilotage (11),
1.5 un dispositif à électro-aimant (15) au moyen duquel l'organe de pilotage (10) peut être déplacé et 1.6 une membrane (8) qui peut être sollicitée par le fluide sous pression et qui peut être déformée à l'encontre d'une force de rappel par cette sollicitation,
1.7 l'organe de pilotage (10) étant couplé avec la membrane (8), de façon à ce qu'une déformation de la membrane (8) à l'encontre de la force de rappel provoque un mouvement de l'organe de pilotage (10) en direction de la deuxième position de pilotage, **caractérisée en ce que**
1.8 l'organe de pilotage (10) peut être déplacé au moyen du dispositif à électro-aimant (15) vers la première position de pilotage et
1.9 la membrane (8) peut être sollicitée par la pression de commande et peut être déformée par cette sollicitation à l'encontre de la force de rappel.

2. Soupape de commande selon la revendication précédente, la membrane (8) étant disposée dans un trajet d'écoulement du fluide sous pression s'étendant du raccord de pression (P) à la section de pilotage variable (11).

3. Soupape de commande selon l'une des revendications précédentes, la sortie (7) de la chambre de commande (5) étant reliée avec le raccord de travail (A), de façon à ce que le fluide sous pression sortant de la chambre de commande (5) soit guidé par le raccord de travail (A) vers la ou les buses.

4. Soupape de commande selon l'une des revendications précédentes, comprenant un organe à ressort (12) disposé avec une précontrainte de ressort pour la production de la force de rappel s'appliquant sur la membrane (8) à l'encontre du fluide sous pression.

5. Soupape de commande selon l'une des revendications précédentes, la membrane (8) étant appuyée contre un côté arrière opposé au fluide sous pression, de préférence contre un côté arrière opposé à la chambre de commande (5), contre une structure de soutien (13) mobile en direction de la première position de pilotage et en direction de la deuxième position de pilotage, la force de rappel agissant de préférence sur la structure de soutien.

6. Soupape de commande selon l'une des revendications précédentes, la membrane (8) formant une partie de paroi de la chambre de commande (5) ou une chambre de membrane reliée avec le raccord de pression (P).

7. Soupape de commande selon l'une des revendications précédentes, la chambre de commande (5) s'étendant axialement entre le piston de soupape (2) et la membrane (8) et étant délimitée par le piston de soupape (2) au niveau d'une extrémité axiale et par la membrane (8) au niveau de l'autre extrémité axiale.

8. Soupape de commande selon l'une des revendications précédentes, un siège pour l'organe de pilotage (10) formant la section de pilotage (11) et la force de rappel agissant en direction du siège sur la membrane (8) et l'organe de pilotage (10).

9. Soupape de commande selon l'une des revendications précédentes, comprenant un boîtier (1) avec une portion de boîtier à extension axiale, qui entoure le piston de soupape (2) en formant un interstice d'étanchéité s'étendant sur la circonférence du piston de soupape (2) et de manière axiale, et comprend la section de commande primaire (4) au niveau de l'interstice d'étanchéité circonférentiel.

10. Soupape de commande selon l'une des revendications précédentes, le piston de soupape (2) pouvant être sollicité à l'encontre de la pression de commande par le fluide sous pression par le raccord de pression (P), moyennant quoi, dans des modes de réalisation préférés, la pression de commande régnant dans la chambre de commande (5) agissant en direction de la position de flux minimal et le fluide sous pression agissant à partir du raccord de pression en direction de la position de flux maximal sur le piston de soupape (2).

11. Soupape de commande selon l'une des revendications précédentes, le dispositif à électro-aimant (15) comprenant une bobine contrôlable (16) et un poussoir (18), qui peut être déplacé au moyen de la bobine (16) dans une direction d'action, de préférence à l'encontre de la force élastique d'un ressort (20), un déplacement dans la direction d'action du poussoir (16) provoquant un déplacement de l'organe de pilotage (10) vers la première position de pilotage.

12. Soupape de commande selon l'une des revendications précédentes,
(i) l'organe de pilotage (10) étant joint à la membrane (8) ou réalisé sous la forme d'un sous-ensemble par moulage par injection ou par pressage ; et/ou
(ii) le poussoir (18) selon la revendication 11 et l'organe de pilotage (10) sont soit reliés entre eux de manière immobile, par exemple joints, soit moulés ensemble ou
(iii) le poussoir (18) selon la revendication 11 interagit avec l'organe de pilotage (10) dans la direction d'action et de préférence également à l'encontre de la direction d'action uniquement avec un contact par pression.

13. Soupape de commande selon l'une des revendications précédentes, un canal de liaison s'étendant à travers le piston de soupape (2) formant l'entrée (2) de la chambre de commande (5).

14. Soupape de commande selon l'une des revendications précédentes, comprenant un ressort de soupape (6) pour la production d'une force élastique agissant en direction de la position de flux minimal sur le piston de soupape (2).

15. Système de refroidissement d'un ou plusieurs composants d'un moteur à combustion avec un fluide de refroidissement, de préférence pour le refroidissement par pulvérisation d'un ou plusieurs pistons d'un moteur à combustion d'un véhicule, ce système de refroidissement comprenant :
15.1 une ou plusieurs buses de refroidissement pour le refroidissement par pulvérisation des composants à refroidir,
15.2 la soupape de commande selon l'une des revendications précédentes et
15.3 une conduite d'évacuation qui est raccordée au raccord de travail (A) et est reliée avec une ou les plusieurs buses de refroidissement, afin de pouvoir guider le fluide sous pression servant de fluide de refroidissement vers la ou les buses de refroidissement.
